# FASCICULE DE BREVET EUROPEEN

(11) **EP 2 171 261 B1**
(45) Date de publication et mention de la délivrance du brevet: **21.11.2012**
(21) Numéro de dépôt: 08826846.1
(22) Date de dépôt: 23.07.2008
(51) Int. Cl.: F03B 11/04, F03B 11/00, F03B 3/12, F03B 1/04

(54) **MACHINE HYDRAULIQUE COMPRENANT DES MOYENS D'INJECTION D'UN ÉCOULEMENT PRÉLEVÉ D'UN ÉCOULEMENT PRINCIPAL**
HYDRAULISCHE MASCHINE MIT MITTELN ZUR INJEKTION EINES AUS EINEM HAUPTSTROM ABGEZOGENEN STROMS
HYDRAULIC MACHINE INCLUDING MEANS FOR INJECTING A FLOW DRAWN FROM A MAIN FLOW

(30) Priorité: 23.07.2007 FR 0705332
(43) Date de publication de la demande: 07.04.2010
(73) Titulaire: Alstom Hydro France, 92300 Levallois Perret (FR)
(72) Inventeur: MAZZOUJI, Farid, F-38210 Vourey (FR); TRAVERSAZ, Monique, F-38610 Gieres (FR)
(74) Mandataire: Myon, Gérard Jean-Pierre
(86) Numéro de dépôt international: PCT/FR2008/051385
(87) Numéro de publication internationale: WO 2009/016315

(56) Documents cités:
- DE-B- 1 187 559
- JP-A- 3 206 362
- US-A- 1 942 995
- US-B1- 6 524 063

## Description

La présente invention concerne une machine hydraulique du type traversée par un écoulement principal d'eau, comprenant au moins un profil d'aubage d'une turbine, présentant une extrémité amont et une extrémité aval, au voisinage de laquelle se forme au moins une zone tourbillonnaire ou une zone de pression réduite ou une zone de cavitation, la machine comprenant des moyens d'injection d'un écoulement prélevé dudit écoulement principal, non modifié par rapport à l'écoulement principal, dans ladite zone tourbillonnaire ou de pression réduite ou de cavitation de sorte à modifier localement l'écoulement principal ou augmenter la pression dans cette zone.

Une telle machine hydraulique est utilisée, par exemple dans une usine de production d'hydro-électricité. La machine est installée au fil de l'eau ou est alimentée en eau à partir d'un réservoir dans lequel se déverse un ou plusieurs cours d'eau.

Dans ces machines hydrauliques, il existe des zones dans lesquelles l'écoulement principal traversant la machine est perturbé et forme des tourbillons ou présente une pression réduite ou des zones de cavitations, du fait de la configuration de la machine. De telles zones perturbent les performances générales de la machine hydraulique car elles réduisent l'efficacité d'action de l'écoulement principal dans la machine hydraulique ou occasionnent des problèmes de fonctionnement de la machine hydraulique.

Le document US-1 942 995 décrit une machine hydraulique du type précité, permettant d'injecter un écoulement prélevé de l'écoulement principal dans la zone de cavitation se formant le long des aubes de la roue de la turbine.

Cependant, les orifices de sortie de l'écoulement prélevé sont agencés pour injecter l'écoulement selon une direction sensiblement perpendiculaire à la direction de l'écoulement principal. De tels orifices ne permettent pas de supprimer les zones tourbillonnaires se formant dans le sillage des aubes et perturbant également les performances générales de la machine hydraulique.

L'un des buts de l'invention est de pallier ces inconvénients en proposant une machine hydraulique permettant de supprimer les zones tourbillonnaires se formant dans le sillage d'un profil d'aubage quelconque.

A cet effet, l'invention concerne une machine hydraulique du type précité, dans laquelle les moyens d'injection comprenant une conduite prélevant l'écoulement de l'écoulement principal et le faisant déboucher dans l'extrémité aval sensiblement selon la direction de l'écoulement principal.

L'injection d'un écoulement prélevé de l'écoulement principal dans l'extrémité aval du profil d'aubage permet de modifier l'écoulement principal dans la zone tourbillonnaire se formant immédiatement en aval du profil d'aubage dans le sillage de celle-ci. La zone tourbillonnaire est ainsi supprimée, ce qui permet de combler efficacement le manque de performance de l'action de l'écoulement principal dans cette zone, ce qui améliore les performances et le comportement de la machine hydraulique.

Selon d'autres caractéristiques de la machine hydraulique :
- la conduite comprend une entrée prélevant l'écoulement de l'écoulement principal en amont du profil d'aubage et une sortie débouchant dans la zone tourbillonnaire ou de pression réduite ou de cavitation,
- les moyens d'injection comprennent une soupape disposée dans le trajet de l'écoulement prélevé, ladite soupape étant mobile entre une position ouverte dans laquelle elle laisse passer l'écoulement prélevé de l'écoulement principal et une position fermée dans laquelle elle empêche le passage de l'écoulement prélevé,
- le mouvement de la soupape est commandé par des moyens de commande appropriés,
- le profil d'aubage est au moins une aube d'une pluralité d'aubes d'une roue de turbine Francis, lesdites aubes disposées entre un plafond et une ceinture, l'écoulement étant prélevé depuis le plafond ou depuis la ceinture au moyen d'ouvertures pratiquées dans ledit plafond ou dans ladite ceinture, ledit écoulement débouchant dans l'extrémité aval de la au moins une aube.

D'autres aspects et avantages de l'invention apparaîtront au cours de la description qui suit, donnée à titre d'exemple et faite en référence aux dessins annexés dans lesquels :
- la Fig. 1 est une représentation schématique en coupe de dessus d'un profil d'aubage d'une turbine selon l'invention,
- la Fig. 2 est une représentation schématique partielle en coupe d'une turbine Francis selon l'invention,
- la Fig. 3 est une représentation schématique vue de dessus de la roue de turbine Francis de la Fig. 2,

L'invention décrite ci-dessous s'applique notamment à des machines hydrauliques du type turbine Francis. Ces machines étant connues, elles ne seront pas décrites en détail dans la présente description. L'invention s'applique également à d'autres types de machines hydrauliques dans lesquelles des problèmes de formation de zones tourbillonnaires, de pression réduite ou de cavitation se posent.

Dans la description, les termes « amont » et « aval » sont définis par rapport au sens d'écoulement de l'écoulement principal E traversant la machine hydraulique.

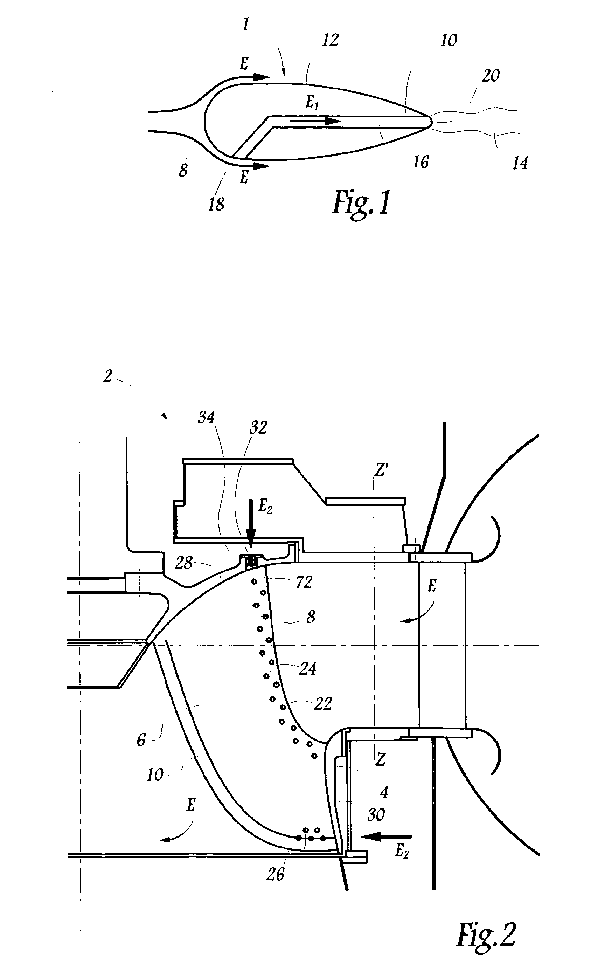

En référence à la Fig. 1, on décrit un organe de machine hydraulique du type profil d'aubage 1 d'une turbine. Un tel profil d'aubage 1 est par exemple une avant-directrice, une directrice ou une aube de turbine. Le profil d'aubage 1 représenté sur la Fig. 1 est une avant-directrice.

Les avant-directrices et les directrices ont pour fonction de guider un écoulement principal E qui traverse la roue 4 de la turbine en léchant des aubes 6, ce qui entraîne la rotation de la roue 4 autour d'un axe vertical Z-Z'.

Le profil d'aubage 1 présente une extrémité amont 8 et une extrémité aval 10 reliées entre elles par des parois latérales 12 léchées par l'écoulement principal E. Que ce soit pour une avant-directrice, une directrice ou une aube de turbine, une zone 14 tourbillonnaire et/ou de pression réduite se crée au voisinage de l'extrémité aval 10, notamment immédiatement en aval de l'extrémité aval 10, ce qui peut entraîner des vibrations dans la machine hydraulique.

Le profil d'aubage 1 comprend au moins une conduite 16 s'étendant à l'intérieur du profil entre une ouverture d'entrée 18 et une ouverture de sortie 20. L'ouverture d'entrée 18 est disposée au voisinage de l'extrémité amont 8 et débouche par exemple dans une des parois latérales 12 du profil d'aubage 1. Une partie E₁ de l'écoulement principal E léchant les parois latérales 12 est donc prélevée dans la conduite 16 par l'ouverture d'entrée 18 et est amenée à l'ouverture de sortie 20. Selon un autre mode de réalisation, la conduite 16 prélève l'écoulement E1 à l'extérieur du profil d'aubage 1 et achemine cet écoulement jusqu'à l'ouverture de sortie 20.

L'ouverture de sortie 20 débouche dans l'extrémité aval 10. Ainsi, l'écoulement prélevé E₁ de l'écoulement principal E circule dans la conduite 16 et est injecté dans la zone 14 par l'ouverture de sortie 20. Ceci a pour effet de modifier les propriétés de l'écoulement E dans la zone 14 et de prévenir ainsi les phénomènes de vibration.

Dans le cas d'une aube 6, il se pose également un problème de création de cavitations sur le profil des aubes 6 de la roue 4 dans une zone au voisinage des arêtes d'entrée ou extrémité amont 8 et/ ou des arêtes de sortie ou extrémité aval 10 des aubes. Afin de palier cet inconvénient, l'aube 6, représentée sur la Fig. 2, comprend d'autres conduites (non représentées) s'étendant à l'intérieur de l'aube entre une ouverture d'entrée 22 et une ouverture de sortie 24, 26. Les ouvertures d'entrée 22 des conduites sont disposées au voisinage de l'extrémité amont 8 de l'aube 6 de sorte à prélever un écoulement de l'écoulement principal E en amont de l'aube. Les ouvertures de sortie 24, 26 des conduites sont agencées pour injecter l'écoulement prélevé sur les parois latérales des aubes 6 au voisinage de l'extrémité amont 8 et/ou de l'extrémité aval 10 de l'aube 6. L'écoulement prélevé et injecté a pour effet de modifier localement l'écoulement principal E et d'éviter ainsi les phénomènes de formation de cavitation sur le profil les aubes. Certaines conduites comprennent donc une ouverture de sortie 24 débouchant dans une paroi latérale de l'aube 6 au voisinage de l'extrémité amont 8 afin d'éviter les phénomènes de formation de cavitation sur les aubes au voisinage de l'extrémité amont 8. D'autres conduites comprennent une ouverture de sortie 26 débouchant dans une paroi latérale de l'aube 6 au voisinage de l'extrémité aval 10 afin d'éviter les phénomènes de formation de cavitation sur les aubes au voisinage de l'extrémité amont 10.

Selon divers modes de réalisation, les ouvertures d'entrée et de sortie peuvent être disposées en série le long de l'extrémité amont 8 et de l'extrémité aval 10 de l'aube 6 selon une direction qui peut être perpendiculaire à la direction de l'écoulement principal E, comme représenté par les ouvertures de sortie 24 de la Fig. 2.

Selon l'invention, des ouvertures de sortie sont disposées de sorte à déboucher dans l'extrémité aval 10 de l'aube 6 selon la direction de l'écoulement principal E. Les ouvertures débouchent par exemple dans le culot de l'aube 6. L'injection de l'écoulement prélevé dans l'extrémité aval permet de supprimer la zone tourbillonnaire qui se forme dans le sillage des aubes 6.

Les aubes 6 de la roue 4 sont disposées entre un plafond 28 et une ceinture 30.

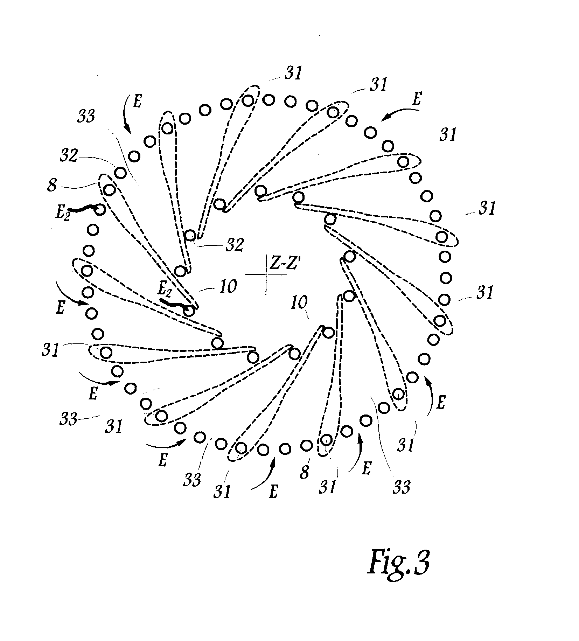

Selon un mode de réalisation, les phénomènes de cavitation sur les aubes peuvent également être empêchés par des ouvertures 31 pratiquées dans le plafond 28 au regard des aubes 6, comme représenté sur la Fig. 3. Ces ouvertures 31 communiquent avec les ouvertures de sortie 24, 26 et/ou avec les ouvertures de sortie 20 débouchant dans l'extrémité aval 10 au moyen de canalisations non représentées. Dans ce mode de réalisation, un écoulement E₂ est prélevé de l'écoulement principal E et passe par des espaces entre la partie fixe de la turbine et les aubes 6 mobiles. L'écoulement prélevé E₂ est prélevé dans l'espace annulaire 34 situé au-dessus du plafond 28. Cet écoulement E₂ passe dans les ouvertures 31 puis est guidé vers les ouvertures de sortie 24, 26 et/ou 20.

En plus, des phénomènes de cavitation sur les aubes, il peut également se produire des phénomènes de formation de vortex dans l'espace 33 entre les aubes 6. Ces phénomènes peuvent être palliés au moyen de conduites, dont les orifices d'entrée et de sortie sont disposées entre les extrémités amont et aval des aubes et débouchent dans l'espace 33 entre les aubes. Selon un mode de réalisation, le problème de formation d'un vortex entre les aubes 6 est résolu au moyen d'orifices 32 pratiqués dans le plafond 28, comme représenté sur la Fig. 2.

Dans ce mode de réalisation, l'écoulement E₂ prélevé en amont des aubes 6 dans l'espace annulaire 34 passe dans les ouvertures 32 et alimente les espaces 33 entre les aubes 6, comme représenté sur la Fig. 3. Les ouvertures 32 sont réparties dans le plafond 28 en regard des espaces 33 séparant les aubes 6. Ainsi, l'écoulement prélevé E₂ est injecté entre les aubes 6 et modifie les propriétés de l'écoulement E afin d'éviter les phénomènes de formation de vortex entre les aubes 6.

En variante, au lieu ou en plus de passer par le plafond 28, l'écoulement prélevé E2 peut passer par la ceinture 30 au moyen d'ouvertures (non représentées) pratiquées dans celle-ci.

Selon un mode de réalisation applicable à tous les moyens d'injection décrit ci-dessus, les moyens d'injection comprennent une soupape 72 disposée dans le trajet de l'écoulement prélevé, comme représenté sur les Figs 2 et 5. La soupape 72 est mobile entre une position ouverte dans laquelle elle laisse passer l'écoulement prélevé et une position fermée dans laquelle elle empêche le passage de l'écoulement prélevé. La soupape 72 est par exemple disposée au voisinage de chaque ouverture d'entrée des moyens d'injection et permet de commander de façon manuelle ou automatique l'injection de l'écoulement prélevé. Dans le cas de la turbine Francis, la soupape 72 est prévue au voisinage de chaque ouverture 32 ménagée dans le plafond 28.

Le mouvement de la soupape 72 est commandé par des moyens de commande (non représentés), mécaniques ou électriques de façon connue en soi. Ainsi, lors de régimes de fonctionnement de la machine hydraulique entraînant la formation de zones tourbillonnaires ou de pression réduite ou de cavitation, un automatisme ou un opérateur de la machine fait passer la ou les soupapes dans la position ouverte ce qui permet d'injecter l'écoulement prélevé dans lesdites zones et de prévenir la formation de ces zones, comme décrit ci-dessus.

Il convient de noter que l'écoulement prélevé n'est pas modifié par rapport à l'écoulement principal E, c'est-à-dire que l'eau ne subit pas d'opération de modification de sa composition au cours de l'écoulement prélevé.

## Revendications

1. Machine hydraulique traversée par un écoulement (E) principal d'eau, comprenant au moins un profil d'aubage (1) d'une turbine, présentant une extrémité amont (8) et une extrémité aval (10), au voisinage de laquelle se forme au moins une zone tourbillonnaire ou une zone de pression réduite ou une zone de cavitation (14), la machine comprenant des moyens d'injection d'un écoulement prélevé (E₁, E₂) dudit écoulement principal, non modifié par rapport à l'écoulement principal (E), dans ladite zone (14) tourbillonnaire ou de pression réduite ou de cavitation de sorte à modifier localement l'écoulement principal (E) ou augmenter la pression dans cette zone (14), **caractérisée en ce que** les moyens d'injection de l'écoulement (E₁, E₂) comprennent une conduite (16) débouchant dans l'extrémité aval (10) sensiblement selon la direction de l'écoulement principal (E).

2. Machine hydraulique selon la revendication 1, **caractérisée en ce que** la conduite (16) du profil d'aubage comprend une entrée (18, 31, 32) prélevant l'écoulement (E₁, E₂) de l'écoulement principal (E) en amont du profil d'aubage (1) et une sortie débouchant dans la zone tourbillonnaire ou de pression réduite ou de cavitation (14).

3. Machine hydraulique selon la revendication 2, **caractérisée en ce que** les moyens d'injection comprennent une soupape (72) disposée dans le trajet de l'écoulement prélevé (E₁, E₂), ladite soupape (72) étant mobile entre une position ouverte dans laquelle elle laisse passer l'écoulement prélevé (E₁, E₂) de l'écoulement principal (E) et une position fermée dans laquelle elle empêche le passage de l'écoulement prélevé (E₁, E₂).

4. Machine hydraulique selon la revendication 3, **caractérisée en ce que** le mouvement de la soupape (72) est commandé par des moyens de commande appropriés.

5. Machine hydraulique selon l'une quelconque des revendications 1 à 4, **caractérisée en ce que** le profil d'aubage (1) est au moins une aube (6) d'une pluralité d'aubes d'une roue (4) de turbine Francis (2), lesdites aubes étant disposées entre un plafond (28) et une ceinture (30), l'écoulement (E₂) étant prélevé depuis le plafond (28) ou depuis la ceinture (30) au moyen d'ouvertures (31, 32) pratiquées dans ledit plafond (28) ou dans ladite ceinture (30), ledit écoulement (E₂) débouchant dans l'extrémité aval (10) de la au moins une aube (6).

## Claims

1. Hydraulic machine traversed by a main flow (E) of water, comprising at least one blade profile (1) of a turbine, having an upstream end (8) and a downstream end (10), in the vicinity of which is formed at least one eddy zone or a reduced-pressure zone or a cavitation zone (14), the machine comprising means of injecting a flow (E₁, E₂) tapped from said main flow, not modified relative to the main flow (E), in said eddy or reduced-pressure or cavitation zone (14) so as to locally modify the main flow (E) or increase the pressure in this zone (14), **characterized in that** the means of injection of the flow (E₁, E₂) comprise a duct (16) opening into the downstream end (10) substantially in the direction of the main flow (E).

2. Hydraulic machine according to Claim 1, **characterized in that** the duct (16) of the blade profile includes an inlet (18, 31, 32) drawing the flow (E₁, E₂) from the main flow (E) upstream of the blade profile (1) and an outlet opening into the eddy or reduced-pressure or cavitation zone (14).

3. Hydraulic machine according to Claim 2, **characterized in that** the injection means comprise a valve (72) placed in the path of the tapped flow (E₁, E₂), the said valve (72) being able to be moved between an open position in which it allows the tapped flow (E₁, E₂) to pass from the main flow (E) and a closed position in which it prevents the passage of the tapped flow (E₁, E₂).

4. Hydraulic machine according to Claim 3, **characterized in that** the movement of the valve (72) is controlled by suitable control means.

5. Hydraulic machine according to any one of Claims 1 to 4, **characterized in that** the blade profile (1) is at least one blade (6) of a plurality of blades of a Francis turbine (2) wheel (4), said blades being arranged between a ceiling (28) and a belt (30), the flow (E₂) being tapped from the ceiling (28) or from the belt (30) by means of openings (31, 32) formed in said ceiling (28) or in said belt (30), said flow (E₂) opening into the downstream end (10) of the at least one blade (6).

## Patentansprüche

1. Hydraulische Maschine, die von einem Wasserhauptdurchfluss (E) durchquert Ist, mindestens ein Schaufelprofil (1) einer Turbine umfassend, das ein Vorlaufende (8) und ein Nachlaufende (10) aufweist, In dessen unmittelbarer Nachbarschaft sich mindestens eine Wirbelzone oder eine Zone reduzierten Drucks oder eine Kavitationszone (14) bildet, wobei die Maschine Einrichtungen zum Einleiten eines vom Hauptdurchfluss abgezogenen, In Bezug auf den Hauptdurchfluss (E) nicht modifizierten Durchflusses (E₁, E₂) in die Wirbelzone (14) oder Zone reduzierten Drucks oder Kavitationszone umfasst, um den Hauptdurchfluss (E) lokal zu modifizieren oder den Druck In dieser Zone (14) zu erhöhen, **dadurch gekennzeichnet, dass** die Einrichtungen zum Einleiten des Durchflusses (E₁, E₂) eine Leitung (16) umfassen, die im Wesentlichen in der Richtung des Hauptdurchflusses (E) in das Nachlaufende (10) mündet.

2. Hydraulische Maschine nach Anspruch 1, **dadurch gekennzeichnet, dass** die Leitung (16) des Schaufelproflls einen den Durchfluss (E₁, E₂) vom Hauptdurchfluss (E) abziehenden Einlass (18, 31, 32) vor dem Schaufelprofil (1) und einen in die Wirbelzone oder Zone reduzierten Drucks oder Kavltationszone (14) mündenden Auslass umfasst.

3. Hydraulische Maschine nach Anspruch 2, **dadurch gekennzeichnet, dass** die Einrichtungen zum Einleiten ein In der Bahn des abgezogenen Durchflusses (E₁, E₂) angeordnetes Ventil (72) umfassen, wobei das Ventil (72) zwischen einer offenen Stellung, in der es den vom Hauptdurchfluss (E) abgezogenen Durchfluss (E₁, E₂) durchfließen lässt, und einer geschlossenen Stellung beweglich ist, in der es den Durchfluss des abgezogenen Durchflusses (E₁, E₂) verhindert.

4. Hydraulische Maschine nach Anspruch 3, **dadurch gekennzeichnet, dass** die Bewegung des Ventils (72) durch geeignete Steuereinrichtungen gesteuert wird.

5. Hydraulische Maschine nach einem der Ansprüche 1 bis 4, **dadurch gekennzeichnet, dass** das Schaufelprofil mindestens eine Schaufel (6) mehrerer Schaufeln eines Rads (4) einer Francis-Turblne (2) ist, wobei die Schaufeln zwischen einer Decke (28) und einer Umschließung (30) angeordnet sind, wobei der Durchfluss (E₂) ausgehend von der Decke (28) oder der Umschließung (30) mittels Öffnungen (31, 32) abgezogen wird, die in der Decke (28) oder der Umschließung (30) ausgebildet sind, wobei sich der Durchfluss (E₂) in das Nachlaufende (10) der mindestens einen Schaufel (6) ergießt.
